# EUROPEAN PATENT SPECIFICATION

(11) **EP 4 563 848 B1**
(45) Date of publication and mention of the grant of the patent: **22.07.2026**
(21) Application number: 24216242.8
(22) Date of filing: 28.11.2024
(51) Int. Cl.: F16H 61/4017, F16H 61/465, F16H 61/47

(54) **METHOD AND CONTROL SYSTEM FOR CONTROLLING A PROPULSION SYSTEM OF A PROPULSION SYSTEM OF A WORK OR AGRICULTURAL VEHICLE**
VERFAHREN UND STEUERUNGSSYSTEM ZUR STEUERUNG EINES ANTRIEBSSYSTEMS EINES ARBEITS- ODER LANDWIRTSCHAFTLICHEN FAHRZEUGS
PROCÉDÉ ET SYSTÈME DE COMMANDE POUR COMMANDER UN SYSTÈME DE PROPULSION D'UN SYSTÈME DE PROPULSION D'UN VÉHICULE DE TRAVAIL OU AGRICOLE

(30) Priority: 01.12.2023 IT 202300025743
(43) Date of publication of application: 04.06.2025
(73) Proprietor: CNH Industrial Italia S.p.A., 10156 Torino (IT)
(72) Inventor: Garramone, Adriano, 10156 Turin (IT); Gravili, Andrea, 10156 Turin (IT); Venezia, Antonio, 10156 Turin (IT); Liberti, Stefano, 10156 Turin (IT)
(74) Representative: CNH Industrial IP Department

(56) References cited:
- EP-A1- 3 933 121
- EP-A2- 2 119 943
- JP-A- 2011 132 973
- JP-A- 2014 069 616
- US-A1- 2019 226 179

## Description

### Field of the invention

The present invention relates to the field of hydraulic transmissions of work machines and agricultural machines, in which the hydraulic transmission is driven by an internal combustion engine.

### State of the art

In work and agricultural vehicles, the transmission to transfer the motion of a prime mover to the wheels is hydraulic. Very often the transmission defines a series configuration, in which the prime mover drives a hydraulic pump with variable displacement, which, in turn, drives a hydraulic motor which can have both fixed and variable displacement.

The pump and the hydraulic motor are interconnected in a known way by means of a so-named as high-pressure hydraulic line or "forward" line and a low-pressure hydraulic line or "return" line of the hydraulic oil towards the hydraulic pump.

A gearbox with discrete ratios is often, but not always, located between the hydraulic motor and the wheels. Very often there are just two gears, to facilitate the autonomous movement of the vehicle from one place of work to another. Generally, the rotation speed of the prime mover is directly proportional to the position of the accelerator lever and the displacement of the pump is proportional to the rotation speed of the prime mover, while the displacement of the hydraulic motor is inversely proportional to the speed of the vehicle.

Consequently, the speed of the vehicle and the rotation speed of the prime mover are approximately directly proportional to each other.

Consequently, the speed of the vehicle and the position of the accelerator lever are approximately directly proportional to each other.

This first operating mode is for convenience defined as "accelerator-base", as the rotation speed of the prime mover is approximately directly proportional to the position of the accelerator lever and the speed of the vehicle depends on the rotation speed of the prime mover.

The term "approximately" remarks that the control is open loop; therefore, an increase in slope causes both the vehicle and the prime mover to slow down.

This fact is very advantageous when the vehicle is working because the driver can use the accelerator lever to manage the generation of hydraulic fluid necessary to operate the various on-board devices functional to the work.

When the vehicle, however, moves from one workplace to another, fuel consumption can be excessive and therefore the same applicant has provided a method for managing the engine and hydraulic transmission with application EP3933121A1.

However, the implementation of the ECO mode according to this solution is especially useful during long vehicle travels and difficult to exploit during the vehicle's work phases.

EP2119943 shows an ECO mode according to which the combustion engine is controlled to constantly maintain a pre-ordained rotation speed, named as "limit speed", which guarantees optimal fuel consumption, while the hydrostatic transmission ratio is modified in order to allow speed variations of the vehicle in response to an action on the accelerator pedal.

A solution identified by the present applicant and not public, provides that during the transition from the accelerator-base mode to the ECO mode, the transmission is controlled by means of a first control, named as "speed control", which has the task of modifying the gear ratio hydrostatic transmission in order to keep the speed of the vehicle unchanged. Advantageously, the operator does not notice the transition from accelerator-base mode to ECO mode.

Just after the transition to ECO mode, a second control is activated, named as "pressure control", which has the task of monitoring the pressure in the high pressure line and regulating the displacement of the hydraulic motor of the hydrostat in order to force the current pressure value at a predetermined pressure threshold, when the current pressure value exceeds this predetermined pressure threshold, without changing the operating point of the prime mover. Advantageously, in this way it is possible to maintain the ECO mode even when the vehicle encounters a slope, or when it forks a pile of material, as the working point of the prime mover remains unchanged in the condition of lower fuel consumption, without the risk to induce the prime mover to stall.

### Summary of the invention

The aim of the present invention is to render the behaviour of the vehicle more flexible in relation to the current mission.

The basic idea of the present invention is to automatically set the values of
- limit speed and preferably also of
- pressure threshold,
depending on deterministic vehicle operating conditions, including vehicle speed and activation status of hydraulic functions.

Preferably, the possible limit speed values are two or three, and therefore belong to a finite and numerable set. Similarly, the possible values of pressure thresholds are two or three, and therefore belong to a numerable set. Advantageously, it is possible to adapt the operating point of the engine and the transmission ratio of the hydrostat to the mission of the vehicle.

For example, if the vehicle moves on the road, a low torque value and a higher vehicle speed are necessary. At the same time, the hydraulic functions, which power the working tools of the vehicle, do not require power; therefore, it is advantageous to set a relatively low limit speed value and a relatively high pressure threshold value, so as to allow a high transmission ratio of the hydrostat.

Generally, when the hydraulic functions are deactivated, the Joystick is deactivated, therefore any operation of it has no effect on the vehicle.

On the contrary, when the vehicle works on site and has the hydraulic functions heavily used, then it is preferable to set a relatively high limit speed value to guarantee sufficient flow of hydraulic oil and a relatively low value of the pressure threshold, in order to force a relatively low gear ratio.

It is clear that the term "relative" used here implies a relationship between the terms low and high used above, in the sense that low is lower than high.

According to a further preferred aspect of the invention, together with the values indicated above, a gain value of the reactivity of the response of the hydrostat to the variation of the inclination of the accelerator lever is also set. As for the other parameters that can be set, in the same way, the possible gain values of the reactivity of the response of the hydrostat to the variation of the inclination of the accelerator lever are two or three, and therefore belong to a numerable set.

As described above, in ECO mode, the accelerator lever impacts exclusively on the hydrostat transmission ratio. Therefore, when the vehicle moves on the road it is desired to set the reactivity of the hydrostat to the variation in the inclination of the accelerator lever at a relatively low level, so as to limit jerks to the vehicle.

On the contrary, when the vehicle operates on the construction site, the operator expects a high reactivity of the vehicle to increase its productivity and therefore, the value of the gain that impacts the reactivity of the hydrostat is relatively high compared to when the vehicle moves on the road.

The dependent claims describe preferred variants of the invention.

### Brief description of the figures

Further objects and advantages of the present invention will be clear from the following detailed description of an example of its implementation (and its variants) and from the attached drawings given purely for explanatory and non-limiting purposes, in which:
Fig. 1 an example of a propulsion scheme of a work or agricultural vehicle in which the present invention is implemented is shown,
Fig. 2 shows a control lever of a work tool connected to the vehicle, which is the subject of the present invention,
Fig. 3 shows a diagram that relates a variation in the configuration of the hydrostat, due to a variation in the position of the accelerator lever, with respect to time.

The same reference numbers and letters in the figures identify the same elements or components or functions.

In the context of this description the term "second" component does not imply the presence of a "first" component. These terms are in fact used as labels to improve clarity, having no ordinal meaning unless it is clear from the text that there is a precise order to be respected.

The elements and characteristics illustrated in the different preferred embodiments, including the drawings, can be combined with each other as long as they do not contradict the claims.

### Detailed description

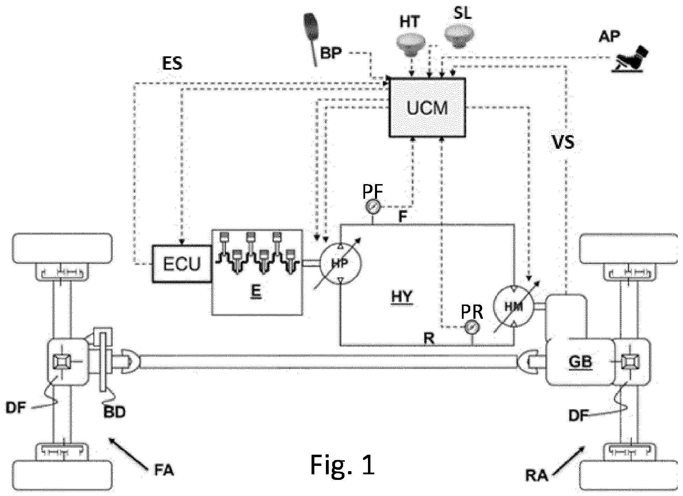

Fig. 1 shows a diagram of the propulsion system of a work or agricultural vehicle.

The propulsion system includes a prime mover E, generally an internal combustion engine, for example Diesel or spark ignition.

The prime mover is configured to drive a variable geometry hydraulic pump HP in rotation, which powers a hydraulic motor HM, for vehicular propulsion, via a forward or high-pressure hydraulic line F and a return or low-pressure line R.

Preferably, the prime mover is connected to the vehicular wheels only through the hydrostat.

The hydraulic motor has a shaft operationally associated with a drive axle RA of the vehicle.

Preferably, this association is achieved by means of a discrete ratio gearbox GB. Generally, the secondary shaft of the gearbox GB rotates a port of a differential DF, to rotate the two axle shafts of the driving axle RA. The configuration shown in Fig. 1 is four-wheel drive, so there is a rear driving axle RA and a front driving axle FA.

The configuration shown is per se known.

According to the present invention, the hydraulic pump can be controlled independently of the rotation speed of the prime mover which drives the rotation of the hydraulic pump itself. More preferably, the hydraulic motor has variable displacement and can be controlled independently of the hydraulic pump by means of respective electro-hydraulic valves, not shown.

An engine control processing unit ECU is configured to control the operation of the prime mover.

A vehicle processing unit UCM interfaces with the engine control processing unit ECU and is configured to control the hydraulic transmission HY as well as monitor the position of levers, buttons and human/machine interface controls, both in relation to the movement of the vehicle and in relation to the functioning of arms and working parts connected to the vehicle.

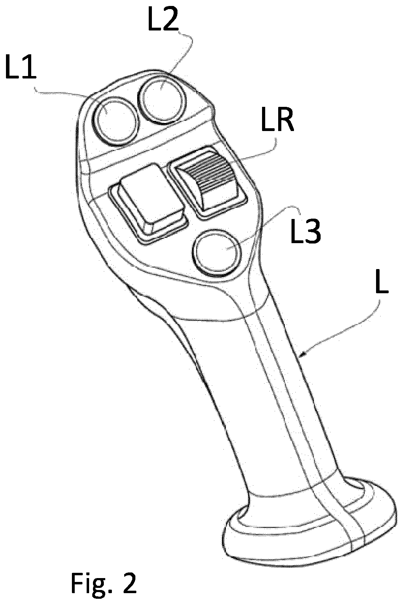

L indicates, in Fig. 2, the control lever of a working part of the vehicle, such as an arm or a tool.

AP indicates, in figure 1, the accelerator pedal, and SL indicates the smart mode selector.

The presence of two distinct processing units is entirely optional. A single processing unit can control both the prime mover and all the other functions of the vehicle and monitor the activation of commands by the operator.

The present invention is preferably implemented in the UCM vehicular processing unit, but it could be implemented in the ECU.

The speed of the engine ES can be measured in any way, for example by means of the so-called as phonic wheel associated with the crankshaft (not shown).

In accelerator-base mode, as the speed of the vehicle VS increases, the displacement of the hydraulic pump increases, while the displacement of the hydraulic motor decreases.

The inverse proportionality between the value of the displacement of the hydraulic pump and the value of the displacement of the hydraulic motor can be tabulated according to a pre-ordained strategy.

For example, a pressure sensor PF is arranged on the high-pressure hydraulic line F and a pressure sensor PR is arranged on the return hydraulic line R.

According to the present invention, in response to the activation of the ECO mode, a control is activated, named as "pressure control", which has the task of monitoring the pressure in the high-pressure line and regulating the displacement of the hydraulic motor of the hydrostat so as to force the current pressure value to a predetermined pressure threshold, when the current pressure value exceeds said predetermined pressure threshold.

According to the present invention, when the smart mode is set, the processing unit UCM is configured to select from two or three possible values the
- Value of the limit speed, also named as "engine set point", and the
- Value of the predetermined pressure threshold, also named as "pressure threshold" PT.

In other words, the UCM selects the best "engine set point" in relation to the vehicle's operating conditions.

In relation to the value of the limit speed, if the vehicle moves at a speed VS higher than a first predetermined threshold VS1, for example 10 km/h, then a Light value of the limit speed of the prime mover is set. The Light value, for example, can be 1700 rpm.

However, when the vehicle speed is lower than the first predetermined threshold VS1, the value Medium is set if the HF hydraulic functions are not active and Heavy if the hydraulic functions are active.

For example, the Medium value can be 2000 rpm and the Heavy value can be 2200 rpm.

The following table summarizes the set point selection:

| Engine set point | VS>VS1 | VS<VS1 |
|---|---|---|
| HF = OFF | Light | Medium |
| HF = ON | Light | Heavy |

According to another aspect of the present invention, which is combined with the previous variant, the value of the pressure threshold is selected as follows: if the vehicle moves at a speed lower than a second speed threshold VS2 lower than the first threshold VS1, for example of 5km/h, then the Low value of the pressure threshold is set, while if the vehicle speed VS is higher than the second threshold, but lower than a third speed threshold VS3, higher than the first threshold VS1, for example of 20 km/h, then the Medium value is set, while when the vehicle speed exceeds the third threshold then the High value is set.

For example, the Low value can be of the order of 220 bar, while the High value is of the order of 380 bar and the Medium value is intermediate between the first two and can be of the order of 300 bar.

Advantageously, if the vehicle moves at a relatively low speed, the hydrostat is forced to maintain a lower gear ratio, with greater driving torque available, while when the vehicle moves at a relatively high speed, the hydrostat is allowed to achieve a higher transmission ratio to allow the vehicle to move on the road while allowing the Low set point to be set relative to the prime mover's limit speed value.

The control strategy relating to the pressure threshold can be summarized using the following table:

| | VS<VS2 | VS2<VS<VS3 | VS>VS3 |
|---|---|---|---|
| Pressure threshold PT | Low | Medium | High |

Advantageously, from the combination of the two strategies, it is obtained that when the vehicle moves on the road at high speed and a high flow rate of hydraulic oil is not necessary, the UCM selects the engine set point Light, with a low value of the limit speed, for example 1700 rpm, and a high pressure threshold value, for example 380 bar, so that the hydrostat can maintain a high gear ratio.

Instead, when the vehicle has to carry out heavy work, such as digging, it moves at a low speed and needs a high flow rate of hydraulic oil, then the UCM can set the Heavy set point, with a high speed value limit, for example of 2300 rpm, in order to have a high flow rate of hydraulic oil, and a low value of the pressure threshold, for example of 200 bar, in order to maintain a low transmission ratio to the hydrostat.

Instead, the selection of the Medium set point can be used when the vehicle must carry out operations to move a load, for example a pallet, and needs a speed and hydraulic oil flow rate intermediate between the two previous ones, with a value intermediate of the limit speed, for example 2000 rpm, and an intermediate value of the pressure threshold, for example 300 bar.

According to a further aspect of the invention, it may also be possible to set a proportionality factor between the speed of variation of the hydrostat configuration and the speed of variation of the position of the accelerator lever over time.

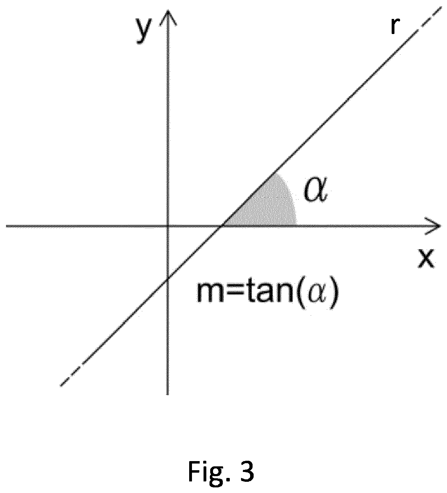

With reference to figure 3, a graph is shown in which a straight line r is indicated which intersects the Cartesian axes x,y; where:
- x reports the time taken to request a configuration of the hydrostat, from the instant of the request through the accelerator lever,
- y is the hydrostat configuration.

The angle α, as known, identifies the angular coefficient of the straight-line *r* which represents the aforementioned proportionality factor.

According to a preferred variant of the invention, the UCM sets the slope of the curve (angle α) together with the aforementioned parameters as a function of the speed with which the accelerator lever is operated. In particular, the angle α increases as the speed DV with which the accelerator lever is operated increases.

| | DV < DV1 | DV1 < DV < DV2 | DV > DV2 |
|---|---|---|---|
| α | Low | Medium | High |

With a relatively low α coefficient "Low", the hydrostat adapts more slowly to variations in the position of the accelerator lever and vice versa with a relatively high α "High". It is worth remembering here that in ECO mode, the prime mover is operated at a fixed speed corresponding to the limit speed, while the accelerator lever impacts exclusively on the hydrostat transmission ratio, allowing the speed of the vehicle to be varied.

Also, in the table shown above, the Low, Medium and High values can be selected following the comparison of the value of rapidity of variation of the position of the accelerator lever with the thresholds DV1 and DV2 where DV2 > DV1. According to this description, the terms "relatively high" and "relatively low" are to be considered together in a comparative relationship, in the sense that a relatively high value is higher than a relatively low value.

It can be noted that the three parameters described, namely:
- Limit speed,
- Pressure threshold
- proportionality factor between the hydrostat configuration variation speed, and speed of the variation of the position of the accelerator lever,
they can only take on two or three values. A higher number of values of the aforementioned parameters does not appear to bring particular advantages.

The present invention can advantageously be carried out by means of a computer program which includes coding means for carrying out the steps of the method, when this program is executed on a computer. Therefore, it is understood that the scope of protection extends to said computer program and further to computer readable means comprising a recorded message, said computer readable means comprising program coding means for carrying out the steps of the method, when said program is executed on a computer.

Constructive variations to the non-limiting example described are possible, without departing from the scope of protection of the present invention, including all the equivalent embodiments for a person skilled in the art, to the contents of the claims.

From the above description, the person skilled in the art is able to realize the object of the invention without introducing further construction details.

## Claims

1. A method for controlling a propulsion system of a work or agricultural vehicle, wherein the propulsion system includes a prime mover (E) and a hydraulic transmission (HY) including a variable displacement pump (HP) configured to be driven in rotation by the prime mover and a variable displacement hydraulic motor (HM), operationally connected to the pump via a high pressure (F) and a low pressure (R) hydraulic line, and wherein the vehicle is equipped with at least a hydraulic device controllable following an activation of hydraulic functions, the foreseen method
- a first operating mode, named as "accelerator-base", in which the rotation speed (ES) of the prime mover is directly proportional to a position of an accelerator lever (AP) and wherein a speed (VS) of the vehicle and the rotation speed of the prime mover are approximately directly proportional to each other and
- a second operating mode, named as "ECO", in which the prime mover is operated at a predetermined approximately fixed limit speed and wherein said position of said accelerator lever indicates exclusively a transmission ratio of the hydrostatic transmission;
the method is **characterized in** further comprising an automatic procedure, in said second operating mode, of selecting a limit speed value between two or more values belonging to a finite and numerable set of values, as a function of
- a current speed (VS) of the vehicle and
- an activation state of the hydraulic functions (HF).

2. Method according to claim 1, wherein said selection provides a first value (Light) of the limit speed when the current speed of the vehicle exceeds a first speed threshold (VS1), a second value (Medium) of the limit speed when the speed current of the vehicle is lower than said first threshold and at the same time the hydraulic functions are deactivated and a third limit speed value (Heavy) when the current speed of the vehicle is lower than said first threshold and at the same time the hydraulic functions are active, in which said third value (Heavy) is greater than said second value (Medium) and said second value is greater than said first value (Light).

3. The method of claim 1 or 2, further comprising a step of controlling the transmission ratio of the hydrostat so as to force a current pressure value measured on the high pressure line (F) to a predetermined pressure threshold, when the current pressure value exceeds said predetermined pressure threshold (PT).

4. The method according to claim 3, wherein the method comprises a step of setting said predetermined pressure threshold (PT) to a low value when the current speed of the vehicle is less than a second speed threshold (VS2) less than said first speed threshold, an intermediate value when the current speed of the vehicle is between said second threshold and a third threshold (VS3) greater than said first threshold and a high value when the speed of the vehicle exceeds said third threshold (VS3), wherein the high value is greater than the medium value and the medium value is greater than the low value.

5. A method according to any of the preceding claims, further comprising a step of automatically varying a proportionality factor (α) between the configuration of the hydrostatic transmission and a rate of change in the position of the accelerator lever.

6. Method according to claim 5, wherein said proportionality factor is set as low when the variation over time of the position of the acceleration lever is lower than a first threshold, medium when the variation over time of the position of the acceleration lever is higher to a first threshold and lower than a second threshold, greater than the first threshold, and high when the variation over time of the position of the acceleration lever exceeds said second threshold.

7. Computer program comprising program coding means capable of carrying out all steps of any one of claims 1 to 6, when said program is run on a computer.

8. Computer readable means comprising a recorded program, said computer readable means comprising program coding means capable of carrying out all steps of any of claims 1 to 6, when said program is run on a computer.

9. Work or agricultural vehicle including
- at least one hydraulic device controllable following activation of hydraulic functions,
- a propulsion system comprises a prime mover (E) and a hydraulic transmission (HY) comprising a variable displacement pump configured to be driven in rotation by the prime mover and a variable displacement hydraulic motor (HM), operationally connected to the pump by a forward and a return hydraulic line, the propulsion system being configured to operate according to
- a first operating mode, named as "accelerator-base", in which the rotation speed (ES) of the prime mover is directly proportional to a position of an accelerator lever and wherein a speed (VS) of the vehicle and the speed of rotation of the prime mover are approximately directly proportional to each other and
- a second operating mode, named as "ECO", wherein the prime mover is operated at a predetermined approximately fixed limit speed and in which said position of said accelerator lever indicates exclusively a gear ratio of the hydrostatic transmission;
**characterized by**:
- vehicular processing means (UCM) configured to select, in said second operating mode, a limit speed value between two or more values belonging to a finite and numerable set of values, as a function of
- a current speed (VS) of the vehicle and of
- an activation state of the hydraulic functions (HF).

## Patentansprüche

1. Verfahren zum Steuern eines Antriebssystems eines Arbeits- oder Landwirtschaftsfahrzeugs, wobei das Antriebssystem eine Antriebsmaschine (E) und ein hydraulisches Getriebe (HY) umfasst, das eine Verstellpumpe (HP), die konfiguriert ist, um von der Antriebsmaschine drehend angetrieben zu werden, und einen hydraulischen Verstellmotor (HM) einschließt, der über eine Hochdruck- (F) und eine Niederdruck- (R) Hydraulikleitung betriebsmäßig mit der Pumpe verbunden ist, und wobei das Fahrzeug mit mindestens einer hydraulischen Vorrichtung ausgestattet ist, die nach einer Aktivierung von Hydraulikfunktionen steuerbar ist, das vorgesehene Verfahren
- ein erster Betriebsmodus, bezeichnet als "Beschleunigerbasis", bei dem die Drehzahl (ES) der Antriebsmaschine direkt proportional zu einer Position eines Gashebels (AP) ist und wobei eine Geschwindigkeit (VS) des Fahrzeugs und die Drehzahl der Antriebsmaschine etwa direkt proportional zueinander sind, und
- ein zweiter Betriebsmodus, bezeichnet als "ECO", bei dem die Antriebsmaschine bei einer vorbestimmten etwa festen Grenzgeschwindigkeit betrieben wird und wobei die Position des Gashebels ausschließlich ein Übersetzungsverhältnis des hydrostatischen Getriebes anzeigt;
wobei das Verfahren **dadurch gekennzeichnet ist, dass es** ferner ein automatisches Verfahren, in dem genannten zweiten Betriebsmodus, zur Auswahl eines Grenzgeschwindigkeitswerts zwischen zwei oder mehr Werten umfasst, die zu einer endlichen und abzählbaren Menge von Werten gehören, als Funktion von
- einer aktuellen Geschwindigkeit (VS) des Fahrzeugs und
- einem Aktivierungszustand der hydraulischen Funktionen (HF).

2. Verfahren nach Anspruch 1, wobei die Auswahl einen ersten Wert (Leicht) der Grenzgeschwindigkeit bereitstellt, wenn die aktuelle Geschwindigkeit des Fahrzeugs eine erste Geschwindigkeitsschwelle (VS1) überschreitet, einen zweiten Wert (Mittel) der Grenzgeschwindigkeit, wenn die aktuelle Geschwindigkeit des Fahrzeugs niedriger als die erste Schwelle ist und gleichzeitig die hydraulischen Funktionen deaktiviert sind, und einen dritten Grenzgeschwindigkeitswert (Schwer), wenn die aktuelle Geschwindigkeit des Fahrzeugs niedriger als die erste Schwelle ist und gleichzeitig die hydraulischen Funktionen aktiv sind, wobei der dritte Wert (Schwer) größer als der zweite Wert (Mittel) ist und der zweite Wert größer als der erste Wert (Leicht) ist.

3. Verfahren nach Anspruch 1 oder 2, ferner umfassend einen Schritt des Steuerns des Übersetzungsverhältnisses des Hydrostats, um einen aktuellen Druckwert, der an der Hochdruckleitung (F) gemessen wird, auf einen vorbestimmten Druckschwellenwert zu zwingen, wenn der aktuelle Druckwert den vorbestimmten Druckschwellenwert (PT) überschreitet.

4. Verfahren nach Anspruch 3, wobei das Verfahren einen Schritt des Einstellens des vorbestimmten Druckschwellenwerts (PT) auf einen niedrigen Wert, wenn die aktuelle Geschwindigkeit des Fahrzeugs geringer als ein zweiter Geschwindigkeitsschwellenwert (VS2) ist, der geringer als der erste Geschwindigkeitsschwellenwert ist, einen mittleren Wert, wenn die aktuelle Geschwindigkeit des Fahrzeugs zwischen dem zweiten Schwellenwert und einem dritten Schwellenwert (VS3) liegt, der größer als der erste Schwellenwert ist, und einen hohen Wert umfasst, wenn die Geschwindigkeit des Fahrzeugs den dritten Schwellenwert (VS3) überschreitet, wobei der hohe Wert größer als der mittlere Wert ist und der mittlere Wert größer als der niedrige Wert ist.

5. Verfahren nach einem der vorstehenden Ansprüche, ferner umfassend einen Schritt des automatischen Variierens eines Proportionalitätsfaktors (α) zwischen der Konfiguration des hydrostatischen Getriebes und einer Änderungsrate in der Position des Gashebels.

6. Verfahren nach Anspruch 5, wobei der Proportionalitätsfaktor als niedrig eingestellt wird, wenn die Variation im Laufe der Zeit der Position des Gashebels niedriger als ein erster Schwellenwert ist, als mittel, wenn die Variation im Laufe der Zeit der Position des Gashebels höher als ein erster Schwellenwert und niedriger als ein zweiter Schwellenwert ist, der größer als der erste Schwellenwert ist, und als hoch, wenn die Variation im Laufe der Zeit der Position des Gashebels den zweiten Schwellenwert überschreitet.

7. Computerprogramm, umfassend ein Programmcodiermittel, das imstande ist, alle Schritte nach einem der Ansprüche 1 bis 6 auszuführen, wenn das Programm auf einem Computer ausgeführt wird.

8. Computerlesbares Mittel, umfassend ein aufgezeichnetes Programm, wobei das computerlesbare Mittel, das ein Programmcodiermittel umfasst, imstande ist, alle Schritte nach einem der Ansprüche 1 bis 6 auszuführen, wenn das Programm auf einem Computer ausgeführt wird.

9. Arbeits- oder Landwirtschaftsfahrzeug, einschließend
- mindestens eine hydraulische Vorrichtung, die nach Aktivierung von hydraulischen Funktionen steuerbar ist,
- ein Antriebssystem umfasst eine Antriebsmaschine (E) und ein hydraulisches Getriebe (HY), das eine Verstellpumpe, die konfiguriert ist, um von der Antriebsmaschine drehend angetrieben zu werden, und einen hydraulischen Verstellmotor (HM) umfasst, der mit der Pumpe durch eine Vorlauf- und eine Rücklaufhydraulikleitung betriebsmäßig verbunden ist, wobei das Antriebssystem konfiguriert ist, um zu arbeiten gemäß
- einem ersten Betriebsmodus, bezeichnet als "Beschleunigerbasis", bei dem die Drehzahl (ES) der Antriebsmaschine direkt proportional zu einer Position eines Gashebels ist und wobei eine Geschwindigkeit (VS) des Fahrzeugs und die Drehzahl der Antriebsmaschine etwa direkt proportional zueinander sind und
- einem zweiten Betriebsmodus, bezeichnet als "ECO", bei dem die Antriebsmaschine bei einer vorbestimmten etwa festen Grenzgeschwindigkeit betrieben wird und wobei die Position des Gashebels ausschließlich ein Übersetzungsverhältnis des hydrostatischen Getriebes anzeigt; **gekennzeichnet durch:**
- ein Fahrzeugverarbeitungsmittel (UCM), das dazu konfiguriert ist, in dem zweiten Betriebsmodus einen Grenzgeschwindigkeitswert zwischen zwei oder mehr Werten auszuwählen, die zu einer endlichen und abzählbaren Menge von Werten gehören, als Funktion von
- einer aktuellen Geschwindigkeit (VS) des Fahrzeugs und
- einem Aktivierungszustand der hydraulischen Funktionen (HF).

## Revendications

1. Procédé permettant de commander un système de propulsion d'un véhicule de travail ou agricole, dans lequel le système de propulsion comporte un moteur principal (E) et une transmission hydraulique (HY) comportant une pompe à cylindrée variable (HP) conçue pour être entraînée en rotation par le moteur principal et un moteur hydraulique à cylindrée variable (HM), relié de manière fonctionnelle à la pompe par l'intermédiaire d'une ligne hydraulique haute pression (F) et basse pression (R), et dans lequel le véhicule est équipé d'au moins un dispositif hydraulique pouvant être commandé à la suite d'une activation de fonctions hydrauliques, le procédé prévu étant
- un premier mode de fonctionnement, appelé « base d'accélérateur », dans lequel la vitesse de rotation (ES) du chargeur principal est directement proportionnelle à une position d'un levier d'accélérateur (AP) et dans lequel une vitesse (VS) du véhicule et la vitesse de rotation du chargeur principal sont approximativement directement proportionnelles l'une à l'autre et
- un second mode de fonctionnement, appelé « ECO », dans lequel le chargeur principal fonctionne à une vitesse limite prédéterminée approximativement fixe et dans lequel ladite position dudit levier d'accélérateur indique exclusivement un rapport de transmission de la transmission hydrostatique ;
le procédé est **caractérisé en ce qu'il** comprend en outre une procédure automatique, dans ledit second mode de fonctionnement, consistant à sélectionner une valeur de vitesse limite entre deux valeurs ou plus appartenant à un ensemble fini et innombrable de valeurs, en fonction
- d'une vitesse actuelle (VS) du véhicule et
- d'un état d'activation des fonctions hydrauliques (HF).

2. Procédé selon la revendication 1, dans lequel ladite sélection fournit une première valeur (Light) de la vitesse limite lorsque la vitesse actuelle du véhicule dépasse un premier seuil de vitesse (VS1), une deuxième valeur (Medium) de la vitesse limite lorsque le courant de vitesse du véhicule est inférieur audit premier seuil et en même temps les fonctions hydrauliques sont désactivées et une troisième valeur de vitesse limite (Heavy) lorsque la vitesse actuelle du véhicule est inférieure audit premier seuil et en même temps les fonctions hydrauliques sont actives, dans lequel ladite troisième valeur (Lourde) est supérieure à ladite deuxième valeur (Moyenne) et ladite deuxième valeur est supérieure à ladite première valeur (Légère).

3. Procédé selon la revendication 1 ou 2, comprenant en outre une étape de commande du rapport de transmission de l'hydrostat de façon à forcer une valeur de pression actuelle mesurée sur la ligne haute pression (F) à un seuil de pression prédéterminé, lorsque la valeur de pression actuelle dépasse ledit seuil de pression prédéterminé (PT).

4. Procédé selon la revendication 3, dans lequel le procédé comprend une étape de réglage dudit seuil de pression prédéterminé (PT) à une valeur faible lorsque la vitesse actuelle du véhicule est inférieure à un second seuil de vitesse (VS2) inférieur audit premier seuil de vitesse, une valeur intermédiaire lorsque la vitesse actuelle du véhicule est comprise entre ledit deuxième seuil et un troisième seuil (VS3) supérieur audit premier seuil et une valeur élevée lorsque la vitesse du véhicule dépasse ledit troisième seuil (VS3), dans lequel la valeur élevée est supérieure à la valeur moyenne et la valeur moyenne est supérieure à la valeur faible.

5. Procédé selon l'une quelconque des revendications précédentes, comprenant en outre une étape consistant à faire varier automatiquement un facteur de proportionnalité (a) entre la configuration de la transmission hydrostatique et un taux de variation de la position du levier d'accélérateur.

6. Procédé selon la revendication 5, dans lequel ledit facteur de proportionnalité est défini comme faible lorsque la variation dans le temps de la position du levier d'accélération est inférieure à un premier seuil, moyenne lorsque la variation dans le temps de la position du levier d'accélération est supérieure à un premier seuil et inférieure à un second seuil, supérieure au premier seuil, et élevée lorsque la variation dans le temps de la position du levier d'accélération dépasse ledit second seuil.

7. Programme d'ordinateur comprenant un moyen de codage de programme capable d'effectuer toutes les étapes selon l'une quelconque des revendications 1 à 6, lorsque ledit programme est exécuté sur un ordinateur.

8. Moyen lisible par ordinateur comprenant un programme enregistré, ledit moyen lisible par ordinateur comprenant un moyen de codage de programme capable d'effectuer toutes les étapes selon l'une quelconque des revendications 1 à 6, lorsque ledit programme est exécuté sur un ordinateur.

9. Véhicule de travail ou agricole comportant
- au moins un dispositif hydraulique pouvant être commandé suite à l'activation des fonctions hydrauliques,
- un système de propulsion comprend un chargeur principal (E) et une transmission hydraulique (HY) comprenant une pompe à cylindrée variable conçue pour être entraînée en rotation par le chargeur principal et un moteur hydraulique à cylindrée variable (HM), relié de manière fonctionnelle à la pompe par une conduite hydraulique avant et une conduite hydraulique de retour, le système de propulsion étant conçu pour fonctionner conformément à
- un premier mode de fonctionnement, appelé « base d'accélérateur », dans lequel la vitesse de rotation (ES) du chargeur principal est directement proportionnelle à une position d'un levier d'accélérateur et dans lequel une vitesse (VS) du véhicule et la vitesse de rotation du moteur principal sont approximativement directement proportionnelles l'une à l'autre et
- un second mode de fonctionnement, dénommé « ECO », dans lequel le chargeur principal fonctionne à une vitesse limite prédéterminée approximativement fixe et dans lequel ladite position dudit levier d'accélérateur indique exclusivement un rapport de vitesse de la transmission hydrostatique ; **caractérisé par** :
- un moyen de traitement de véhicule (UCM) configuré pour sélectionner, dans ledit deuxième mode de fonctionnement, une valeur de vitesse limite entre deux valeurs ou plus appartenant à un ensemble fini et innombrable de valeurs, en fonction
- d'une vitesse actuelle (VS) du véhicule et
- d'un état d'activation des fonctions hydrauliques (HF).
